# FASCICULE DE BREVET EUROPEEN

(11) **EP 0 479 674 B1**
(45) Date de publication et mention de la délivrance du brevet: **04.01.1995**
(21) Numéro de dépôt: 91402629.9
(22) Date de dépôt: 02.10.1991
(51) Int. Cl.: H02P 15/00, H02K 49/04

(54) **Perfectionnements aux dispositifs pour mesurer les couples de freinage engendrés par les ralentisseurs électromagnétiques et aux dispositifs de réglage de ces couples**
Vervollkommnung der Einrichtungen zur Messung der Bremsmomente, erzeugt durch elektromagnetische Bremsvorrichtungen und Regeleinrichtungen dieser Momente
Improvement for devices to measure the braking torques produced by electromagnetic braking devices and control devices for these torques

(30) Priorité: 05.10.1990 FR 9012320
(43) Date de publication de la demande: 08.04.1992
(73) Titulaire: LABAVIA-S.G.E., F-78180 Montigny-le-Bretonneux (FR)
(72) Inventeur: Even, Denis, Vaureal, F-95000 Cergy (FR)
(74) Mandataire: Behaghel, Pierre

(56) Documents cités:
- DE-A- 2 447 506
- FR-A- 2 389 267
- FR-A- 2 402 341

## Description

L'invention est relative aux dispositifs pour mesurer les couples de freinage engendrés par les ralentisseurs électromagnétiques à induit fixe équipant les véhicules.

Elle vise également les dispositifs pour exploiter ces mesures de couples, notamment aux fins de réglage automatique des couples considérés.

Il est souvent utile de connaître la valeur des couples de freinage engendrés par les ralentisseurs électromagnétiques lors de la mise en service de ces ralentisseurs.

Une telle connaissance permet par exemple de déterminer les pannes ou pertes d'efficacité des ralentisseurs considérés.

Ou encore elle permet de régler la valeur réelle du couple à chaque instant, de façon par exemple à maintenir ce couple égal à une valeur de consigne prédéterminée indépendante de la vitesse de rotation du ralentisseur en corrigeant à chaque instant la tension électrique d'alimentation de l'une au moins des bobines rotorique de ce ralentisseur en fonction de la différence entre ladite valeur de consigne et la valeur de couple réelle mesurée audit instant. La publication FR-A-2 402 341 décrit un tel dispositif de réglage du couple de freinage. Mais le couple est directement mesuré par un détecteur de charge qui convertit les efforts mécaniques en un signal electrique.

On n'a guère proposé jusqu'à ce jour de dispositifs fiables et économiques permettant d'effectuer de telles mesures de couples en service.

L'invention propose un tel dispositif propre à mesurer le couple de freinage engendré par un ralentisseur électromagnétique monté sur véhicule à chaque instant de son fonctionnement réel.

A cet effet les dispositifs de mesure de couples selon l'invention sont essentiellement caractérisés en ce qu'ils comprennent des moyens pour mesurer la vitesse de rotation V du rotor du ralentisseur, des moyens pour détecter les variations de la différence de potentiel électrique U engendrée, lors du fonctionnement du ralentisseur, entre deux points, de son induit statorique, suffisamment différenciés l'un de l'autre en ce qui concerne l'évolution du potentiel électrique en ces points lors dudit fonctionnement, des moyens pour mesurer l'amplitude A desdites variations, un circuit à mémoire propre à faire correspondre à chaque paire de valeurs mesurées A et V la valeur C du couple correspondant et des moyens pour afficher ou exploiter lesdites valeurs C.

Dans des modes de réalisation préférés, on a recours en outre à l'une et/ou à l'autre des dispositions suivantes :
- les points, de l'induit statorique, entre lesquels est mesurée la différence de potentiel U sont disposés sur un même cercle admettant pour axe l'axe du ralentisseur et sont décalés angulairement autour de cet axe d'un angle correspondant à un pas polaire de l'inducteur rotorique,
- l'induit statorique présente au moins en partie la forme d'un tambour cylindrique de révolution et les points, de cet induit, entre lesquels est mesurée la différence de potentiel U sont disposés dans un même plan axial dudit tambour, aux extrémités axiales opposées de celui-ci,
- l'induit statorique présente au moins en partie la forme d'un disque de révolution et les points de cet induit entre lesquels est mesurée la différence de potentiel U sont disposés dans un même plan axial dudit disque, aux extrémités radiales opposées de celui-ci,
- les moyens d'affichage sont des moyens visuels localisés au tableau de bord du véhicule équipé du ralentisseur considéré,
- les moyens d'exploitation des valeurs du couple C mesurées à chaque instant comprennent un circuit d'asservissement dans lequel a été introduit un paramètre représentatif d'une valeur de consigne de couple C₀, circuit agencé de façon à corriger la tension électrique d'excitation de l'une au moins des bobines inductrices du ralentisseur en fonction de la différence qui existe à chaque instant entre ladite valeur de consigne C₀ et la valeur réelle mesurée C du couple engendré audit instant par le ralentisseur dans le sens tendant à annuler ladite différence.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation de l'invention en se référant au dessin ci-annexé d'une manière bien entendu non limitative.

La figure 1, de ce dessin, montre très schématiquement un ralentisseur électromagnétique équipé, conformément à l'invention, d'un dispositif de mesure des couples de freinage engendrés par ce ralentisseur ainsi que d'un dispositif permettant de régler lesdits couples.

La figure 2 est une vue perspective schématique du stator induit du ralentisseur ci-dessus, vue permettant de situer les points entre lesquels sont mesurées des différences de potentiel selon l'invention.

Les figures 3 à 6 sont des graphiques permettant d'expliquer les principes mis en oeuvre selon l'invention.

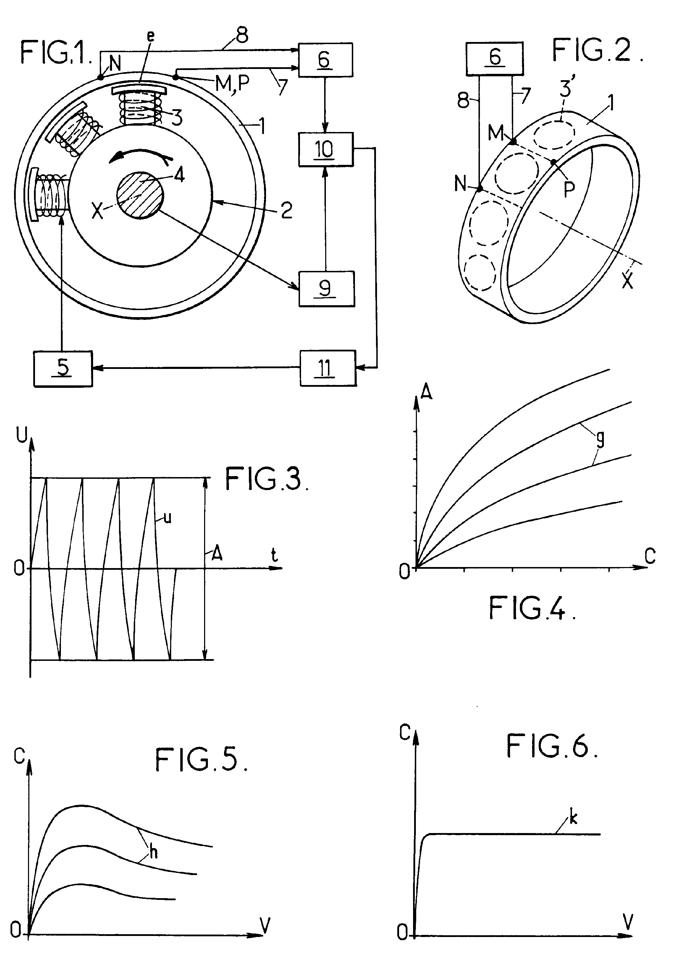

D'une façon connue en soi, le ralentisseur électromagnétique illustré sur les figures 1 et 2 comprend un stator induit 1 constitué par un tambour cylindrique de révolution d'axe X en matériau ferromagnétique et un rotor inducteur 2 coaxial et intérieur au stator 1.

Ce rotor 2 comprend ici une couronne de huit pôles inducteurs 3 angulairement équidistants et orientés radialement, chaque pôle étant séparé de l'induit par un entrefer cylindrique e et étant lui-même constitué par un noyau magnétique entouré par un enroulement ou bobine de fil électrique.

Le rotor 2 est calé angulairement sur un arbre rotatif 4 qui fait partie d'une transmission de véhicule.

Les différentes bobines sont reliées à une source de courant électrique continu à travers des organes de commande et de réglage appropriés, l'ensemble de cette source et de ces organes étant schématisé par le rectangle 5.

Un tel ralentisseur a été par exemple décrit dans le brevet FRANCE n° 88 02301 de la demanderesse.

On choisit sur le stator induit 1 deux points M et N (ou M et P) qui sont suffisamment différenciés pour que les variations du potentiel électrique qui règne respectivement en chacun de ces deux points lors du fonctionnement du ralentisseur soient le plus possible distinctes l'une de l'autre.

A cet effet, on décale par exemple angulairement les deux points en question M et N autour de l'axe X d'un angle correspondant à un pas polaire de l'inducteur : sur la figure 2, on a schématisé par des courbes en traits interrompus 3′ les emplacements que peuvent occuper les différents pôles 3 de l'inducteur à l'intérieur de l'induit à un instant donné.

On voit également sur cette figure 2 que le point M est avantageusement disposé à une extrémité axiale du tambour 1 constitutif de l'induit statorique.

Dans une telle configuration, le point P susceptible d'être associé au point M à la place du point N peut être celui qui se trouve dans le même plan axial que le point M et à la même distance que celui-ci de l'axe X, à l'extrémité axiale opposée du stator induit 1 par rapport à ce point M.

On prévoit des moyens pour mesurer en permanence la différence de potentiel U qui existe entre les deux points M et N ou M et P.

A cet effet, on relie aux deux points considérés un dispositif 6 de mesure de différence de potentiel à l'aide de conducteurs 7 et 8 qui peuvent être considérés comme deux électrodes appliquées par brasage ponctuel sur le tambour 1 en ses deux points M et N ou M et P.

L'expérience montre que, lorsque le rotor inducteur 2 est excité électriquement et tourne, la différence de potentiel U mesurée entre les deux points considérés varie alternativement dans le temps selon les ondulations représentées en u sur la figure 3 : sur cette figure 3, les différences de potentiel U ont été portées en ordonnées et le temps t en abscisses.

Les ondulations u en question sont régulières et présentent une fréquence de récurrence F qui correspond directement à la fréquence de défilement des pôles successifs 3 à proximité de chacun des points M, N et/ou P considérés : cette fréquence F est proportionnelle à la vitesse de rotation du rotor 2 et au nombre des pôles 3 de ce rotor.

La demanderesse a constaté que l'amplitude A desdites ondulations u, comptée de crête à crête, est directement liée au couple C engendré par le ralentisseur selon une loi bien déterminée qui peut être schématisée par les courbes g du graphique de la figure 4, chacune de ces courbes correspondant à une vitesse donnée V de rotation du rotor 2, les valeurs de A croissant dans le même sens que la vitesse V pour chaque valeur donnée du couple C.

Ces courbes g peuvent être établies en atelier avant montage du ralentisseur considéré sur le véhicule auquel il est affecté.

En définitive, si l'on connaît à un instant donné la vitesse V de rotation du rotor 2 et la valeur de l'amplitude A ci-dessus définie, on peut, à l'aide desdites courbes g, déterminer le couple C engendré par le ralentisseur à l'instant considéré.

Pour parvenir à ce résultat, on prévoit un dispositif 9 pour mesurer la vitesse V de l'arbre 5 par tous moyens tachymétriques désirables -pouvant faire appel éventuellement à une mesure de la fréquence F- et l'on a recours à un circuit 10 à mémoire dans lequel on enregistre les lois, correspondant aux courbes g ci-dessus, qui font correspondre à chaque paire de paramètres A et V une valeur bien déterminée du couple C.

On applique alors sur le circuit 10 les sorties des deux dispositifs 6 et 9 fournissant respectivement les valeurs des paramètres A et V, généralement sous la forme de tensions électriques et l'on recueille à la sortie du circuit 10 les valeurs du couple C.

Ces valeurs peuvent être directement affichées sous forme visuelle, par exemple par l'intermédiaire d'un cadran à aiguille directement gradué en mdaN et placé au tableau de bord du véhicule équipé du ralentisseur considéré.

Selon une variante avantageuse, on exploite directement les valeurs de couple C ainsi élaborées à des fins de réglage de ce couple.

C'est ce qui a été schématisé sur la figure 1, dans laquelle l'information recueillie à la sortie du circuit 10 est appliquée sur un circuit de traitement 11.

Le traitement effectué par ledit circuit 11 est avantageusement celui décrit ci-après.

En général, avec les ralentisseurs électromagnétiques, la courbe représentant les variations du couple de freinage C en fonction de la vitesse de rotation V de l'arbre à freiner présente la forme illustrée sur la figure 5, comprenant un sommet pour une vitesse moyenne, puis une réduction de plus en plus importante au fur et à mesure de l'accroissement de la vitesse : les différentes courbes h représentées sur cette figure 5 correspondent à des taux d'excitation différents du ralentisseur, le couple engendré par ce dernier étant en particulier d'autant plus important que le nombre des bobines de ce ralentisseur reliées à la source de courant électrique est plus élevé.

Dans certains cas, il peut être recherché d'obtenir une courbe représentative des variations du couple C en fonction de la vitesse V qui corresponde à celle schématisée en k sur la figure 6, c'est-à-dire à un palier rectiligne horizontal ou, en d'autres termes, à une constance dudit couple indépendamment de la vitesse.

Une telle réponse est en particulier recommandée par certains constructeurs de matériel de freinage à friction lorsqu'il est envisagé d'ajouter, sur un véhicule donné déjà équipé de freins à friction, un ralentisseur électromagnétique.

La connaissance du couple instantané engendré par le ralentisseur, rendue possible par les moyens décrits ci-dessus, permet de concevoir une chaîne d'asservissement conduisant à la conservation du couple malgré les variations de la vitesse.

Il suffit en effet d'introduire dans le circuit 11, généralement sous la forme d'une tension électrique, la valeur de consigne C₀ que l'on désire imposer au couple de ralentissement pour pouvoir faire élaborer à chaque instant par ledit circuit un terme correctif lié à la différence entre ladite valeur C₀ et la valeur réelle C mesurée audit instant et provenant du circuit 10 : il est facile d'exploiter le signal correctif ou d'erreur ainsi élaboré pour corriger la tension d'excitation électrique engendrée par l'ensemble 5 dans le sens tendant à annuler ledit signal d'erreur.

Selon une variante, une telle régulation peut être exploitée pour faire correspondre systématiquement aux mises en position de la manette de commande de l'excitation du ralentisseur en certaines de ses positions des pourcentages prédéterminés et constants du couple total susceptible d'être engendré par le ralentisseur.

Si par exemple cette manette peut occuper quatre positions actives correspondant respectivement à des excitations croissantes du ralentisseur, par mise en service successivement de deux, quatre, six et huit bobines de ce ralentisseur, on peut agencer le circuit 11 de telle façon qu'il corresponde à chacune de ses positions des couples dont les valeurs correspondent respectivement au quart, à la moitié, aux trois-quarts et à la totalité du couple maximum susceptible d'être engendré par le ralentisseur considéré.

Cette dernière mesure permet également de remédier aux éventuelles pertes d'efficacité du ralentisseur : c'est ainsi que, si, en raison d'une telle perte d'efficacité, le couple maximum disponible n'est plus que de 90 % de celui initialement prévu, la correction ci-dessus proposée permet de maintenir les valeurs absolues des couples correspondant respectivement à 25 %, 50 % et 75 % du couple maximum pour les trois premières positions de la manette de commande.

En suite de quoi, et quel que soit le mode de réalisation adopté, on obtient finalement un dispositif de mesure des couples de freinage engendrés par les ralentisseurs électromagnétiques, et éventuellement des dispositifs de réglage de tels couples, dont les constitutions, fonctionnements et avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes telles que définies par les revendications.

## Revendications

1. Dispositif pour mesurer les couples de freinage engendrés par un ralentisseur électromagnétique à induit fixe (1) équipant un véhicule, caractérisé en ce qu'il comprend des moyens (9) pour mesurer la vitesse de rotation V du rotor (2) du ralentisseur, des moyens (6) pour détecter les variations de la différence de potentiel électrique U engendrée, lors du fonctionnement du ralentisseur, entre deux points (M et N, ou M et P), de son induit statorique (1), suffisamment différenciés l'un de l'autre en ce qui concerne l'évolution du potentiel électrique en ces points lors dudit fonctionnement, des moyens (6) pour mesurer l'amplitude A desdites variations, un circuit à mémoire (10) propre à faire correspondre à chaque paire de valeurs mesurées A et V la valeur C du couple correspondant et des moyens pour afficher ou exploiter lesdites valeurs C.

2. Dispositif de mesure selon la revendication 1, caractérisé en ce que les points (M et N), de l'induit statorique (1), entre lesquels est mesurée la différence de potentiel U sont disposés sur un même cercle admettant pour axe l'axe (X) du ralentisseur et sont décalés angulairement autour de cet axe d'un angle correspondant à un pas polaire de l'inducteur rotorique (2).

3. Dispositif de mesure selon la revendication 1, pour lequel l'induit statorique (1) présente au moins en partie la forme d'un tambour cylindrique de révolution, caractérisé en ce que les points (M et P), de cet induit, entre lesquels est mesurée la différence de potentiel U sont disposés dans un même plan axial dudit tambour, aux extrémités axiales opposées de celui-ci.

4. Dispositif de mesure selon la revendication 1, pour lequel l'induit statorique présente au moins en partie la forme d'un disque de révolution, caractérisé en ce que les points de cet induit entre lesquels est mesurée la différence de potentiel U sont disposés dans un même plan axial dudit disque, aux extrémités radiales opposées de celui-ci.

5. Dispositif de mesure selon l'une quelconque des précédentes revendications, caractérisé en ce que les moyens d'affichage sont des moyens visuels localisés au tableau de bord du véhicule équipé du ralentisseur considéré.

6. Dispositif de mesure selon l'une quelconque des précédentes revendications, caractérisé en ce que les moyens d'exploitation des valeurs du couple C mesurées à chaque instant comprennent un circuit d'asservissement (11) dans lequel a été introduit un paramètre représentatif d'une valeur de consigne de couple C₀, circuit agencé de façon à corriger la tension électrique d'excitation de l'une au moins des bobines inductrices du ralentisseur en fonction de la différence qui existe à chaque instant entre ladite valeur de consigne C₀ et la valeur réelle mesurée C du couple engendré audit instant par le ralentisseur dans le sens tendant à annuler ladite différence.

## Patentansprüche

1. Einrichtung zur Messung der Bremsmomente, die durch eine sich in einem Fahrzeug befindliche elektromagnetische Bremsvorrichtung mit feststehendem Anker (1) erzeugt werden, gekennzeichnet durch:
- Mittel (9) zur Messung der Drehzahl V des Rotors (2) der Bremsvorrichtung,
- Mittel (6) zum Erfassen der Veränderungen der elektrischen Potentialdifferenz U, die beim Betrieb der Bremsvorrichtung zwischen zwei Punkten (M und N oder M und P) ihres feststehenden Ankers (1) erzeugt wird, wobei die Punkte bezüglich der Entwicklung der elektrischen Potentialdifferenz an diesen Punkten während des Betriebs ausreichend voneinander entfernt sind,
- Mittel (6) zur Messung der Amplitude A der Veränderungen,
- einen Speicherkreis (10), der geeignet ist für die Gegenüberstellung jedes gemessenen Wertepaares A und V mit dem Wert C des entsprechenden Momentes und
- Mittel zur Anzeige oder Auswertung der Werte C.

2. Meßeinrichtung nach Anspruch 1, dadurch gekennzeichnet, daß die Punkte (M und N) des feststehenden Ankers (1), zwischen denen die Potentialdifferenz U gemessen wird, auf dem selben Kreis um die Achse (X) der Bremsvorrichtung angeordnet sind und winklig um diese Achse versetzt sind mit einem Winkel, der einer Polteilung des rotierenden Induktors (2) entspricht.

3. Meßeinrichtung nach Anspruch 1, bei der der feststehende Anker wenigstens teilweise die Form einer zylindrischen Umdrehungstrommel darstellt, dadurch gekennzeichnet, daß die Punkte (M und P) dieses Ankers, zwischen denen die Potentialdifferenz U gemessen wird, in der gleichen Axialebene der Trommel an den gegenüberliegenden Achsenenden angeordnet sind.

4. Meßeinrichtung nach Anspruch 1, bei der der feststehende Anker wenigstens teilweise die Form einer Umdrehungsscheibe darstellt, dadurch gekennzeichnet, daß die Punkte dieses Ankers, zwischen denen die Potentialdifferenz U gemessen wird, in der gleichen Axialebene der Scheibe an den gegenüberliegenden Radialenden angeordnet sind.

5. Meßeinrichtung nach einem der vorgenannten Ansprüche, dadurch gekennzeichnet, daß die Mittel der Anzeige visuelle Mittel sind, die auf dem Armaturenbrett des mit dieser Bremsvorrichtung ausgestatteten Fahrzeugs angeordnet sind.

6. Meßeinrichtung nach einem der vorgenannten Ansprüche, dadurch gekennzeichnet, daß die Mittel zur Auswertung der in jedem Augenblick gemessenen Werte des Momentes C einen Regelkreis (11) enthalten, in den ein repräsentativer Parameter eines Sollwertes des Momentes Cₒ eingegeben wurde, wobei dieser Kreis so eingerichtet ist, daß er die elektrische Erregerspannung von wenigstens einer der Induktionsspulen der Bremsvorrichtung korrigiert in Abhängigkeit von der Differenz, die in jedem Augenblick zwischen dem genannten Sollwert Cₒ und dem tatsächlich gemessenen Wert C des Momentes besteht, das in dem Augenblick durch die Bremsvorrichtung erzeugt wird, mit der Tendenz, die Differenz aufzuheben.

## Claims

1. Measuring device for measuring the braking torques generated by a vehicle-mounted electromagnetic retarder having a fixed armature or secondary magnetic circuit (1), characterized in that it comprises means (9) for measuring the speed of rotation V of the rotor (2) of the retarder, means (6) for detecting variations in the electrical potential difference U that is generated during operation of the retarder between two points (M and N, or M and P) on its stator armature (1), which points are sufficiently distinct from each other with respect to the way electrical potential varies at said points during said operation, means (6) for measuring the amplitude A of said variation, a memory circuit (10) suitable for causing to let correspond to each pair of measured values A and V the value C of the corresponding torque, and means for displaying or making use of said values C.

2. Measuring device according to claim 1, characterized in that the points (M and N) of the stator armature (1) between which the potential differences U is measured are disposed on a same circle about the axis (X) of the retarder and are angularly offset about said axis by an angle corresponding to the pole pitch of the rotor (2).

3. Measuring device according to claim 1, in which the stator armature (1) is at least partially in the form of a cylindrical drum that is circularly symmetrical, characterized in that the two points (M and P) on said stator armature between which the potential difference U is measured are both disposed in a same axial plane of said drum, at opposite axial ends therof.

4. Measuring device according to claim 1, in which the stator armature is at least partially in the form of a circularly symmetrical disk, characterized in that the two points on said armature between which the potential difference U is measured are disposed in the same axial plane of said disk, at opposite radial ends thereof.

5. Measuring device according to any preceeding claim, characterized in that the display means are visual display means located in the dashboard of the vehicle fitted with the retarder in question.

6. Measuring device according to any preceding claim, characterized in that the means for making use of the torque values C as measured at each instant comprise a servo-control circuit (11) to which a parameter is applied representing a reference torque value C₀, the servo-control circuit being organized to correct the electrical excitation voltage of at least one of the primary coils of the retarder as a function of the difference that exists at each instant between said reference value C₀ and the measured real value C of the torque generated at said instant by the retarder, the correction being in the direction that tends to cancel said difference.
